# EUROPEAN PATENT APPLICATION

(11) **EP 1 878 542 A1**
(43) Date of publication of application: **16.01.2008**
(21) Application number: 06116765.6
(22) Date of filing: 07.07.2006
(51) Int. Cl.: B25J 9/16

(54) **A control system and a method for controlling one or several industrial robots**

(71) Applicant: ABB RESEARCH LTD., 8050 Zürich (CH)
(72) Inventor: Wäppling, Daniel, SE-722 14, VÄSTERÅS (SE); FENG, Xiaolong, SE-722 46, VÄSTERÅS (SE)
(74) Representative: Reyier, Ann-Mari

(57) **Abstract**

The invention relates to a control system (10) for an industrial robot. The control system comprises a parameter storage means (16) for storage of a first set of performance limitation parameters (30) for running the robot in normal mode and a second set of performance limitation parameters (32) for running the robot in high performance mode. The control system further comprises a program storage means (12) for storage of at least one robot program including a series of robot program instructions and including at least one instruction for switching to a high performance mode and at least one instruction for switching to normal mode, and a program executer (14) adapted to, when running the robot program, execute the stored robot program instructions, and detect whether normal or high performance mode is selected, and if normal performance mode is selected execute the robot program instructions with regard to the first set of performance limitation parameters, and if high performance mode is selected execute the robot program instructions with regard to the second set of performance limitation parameters.

## Description

### TECHNICAL FIELD

The present invention is concerned with a control system for control of one or more industrial robots, wherein the control system comprises one or more computers and drive units for controlling the robots. The present invention also relates to a method for controlling an industrial robot. The invention is particularly useful when used for machine tending type applications.

### BACKGROUND ART

The task of a control system for control of at least one robot is, for instance, to plan the movement path of the robot, so-called path planning, and to ensure that the robot completes the planned path.

The length of the service life of an industrial robot is determined by how its mechanical structure and its components are loaded during the movements carried out by the robot during its service life.

To prevent the loads on the mechanical structure and components of the robot, for example bearings, shafts, motor housing, motors and arm attachment, from becoming too high, for instance, limits to the maximum permissible torques and speed for each one of the axes of the robots or thermal set points, are set in the control system as a set of performance limitation parameters. A set of performance limitation parameters may include one or more performance limitation parameters. These performance limitation parameters limit the performance of the robot and are set when designing the robot. Typical performance limitation parameters are the maximum speeds and maximum torques of the axes, during the whole service life of the robot.

The limits to the performance of the robot represented by the performance limitation parameters such as, for instance, the maximum permissible axis torque and axis speed are calculated based on the guaranteed service life of the robot and the fatigue diagrams for the mechanical structure and the components. The calculation is based on a predictable case with tough assumed movement patterns run a large number of assumed cycles per unit of time. The control system then send control signals based on these performance limitation parameters to the components of the robots when the robot are run. The mechanics of robots of today are thus dimensioned such that the robot is able to carry out these predictable severe movement patterns conceivable during the whole of its predicted life length. Further when calculating the limits of the robot these severe movement patterns are predicted to be run most frequently.

However a robot is run with such movement pattern which is unfavourable for the mechanical structure and the components only a small amount of the time and length of the robots whole service life, and therefore almost all robots of today are oversized in relation to their ordinary service life. In some applications, the robot is only demanded to perform in its severest movement patterns during a small portion of time in a working cycle. This small portion of time with its severest movement patterns sets the demands on high acceleration and speed, and in turn on the maximum capacity of components such as, for instance, motors and gears dimensioned by the performance limitation parameters.

Component capacity usage degree, or component usage degree, is used to explore how a robot is used. During one robot motion cycle, a component usage degree is defined by percentage of the time during which over 80% of the capacity of a component is used over the total working cycle time. Examples from applications used in material handling and machine tending in robot foundry applications show that the gearboxes and motors of these robots are used essentially below their capacity during a large amount of the time the robots move. Further it is difficult to predict the loads in every specified application during the design phase.

One conclusion from the above facts could be that the robots are over-specified. However, in these type of applications the demands on the cycle-time is very high during a small part of the cycle. This small part of the cycle sets the demands on acceleration and speed. Performance demands that are only required during a small part of the robots movement paths pushes cost up, because high demands on acceleration and speed pushes cost up.

It is a desire to reduce the cost in specifying an industrial robot for different tasks by attain an improved control system for such an industrial robot.

### SUMMARY OF THE INVENTION

The aim of the invention is to reduce the production material cost for an industrial robot with maintained service life.

In a first aspect this aim is obtained by a control system as defined by claim 1.

Such a control system for an industrial robot comprises:
a parameter storage means for storage of a first set of performance limitation parameters for running the robot in normal mode and a second set of performance limitation parameters for running the robot in high performance mode,
a program storage means for storage of at least one robot program including a series of robot program instructions and including at least one instruction for switching to a high performance mode and at least one instruction for switching to normal mode, and
a program executer adapted to, when running the robot program, execute the stored robot program instructions, and detect whether normal or high performance mode is selected, and if normal performance mode is selected execute the robot program instructions with regard to the first set of performance limitation parameters, and if high performance mode is selected execute the robot program instructions with regard to the second set of performance limitation parameters.

The invention offers a possibility to select between a high performance mode and a low performance mode. In the high performance mode the performance of the robot is limited according to high performance limitation parameters, which allows the robot to run at higher load, such as with at high speed and at high force. As running the robot in high performance mode causes high load on the robot, the robot is only allowed to be run in high performance mode during a short time or during a short part of the work cycle in high performance mode.

In the normal performance mode the performance of the robot is limited according to normal performance limitation parameters, which allows the robot to run at normal load, the normal performance limitation parameters has lower limits than the high performance limitation parameters, such as at with speed and torque lower then set in high performance mode.

By only allowing that the robot is run in high performance mode during a given time period or portion of the work cycle it is made possible for the producer to reduce the robot dimensions but still be able to guarantee the same service life for the robot and thereby save costs.

Further the invention has made it possible for the operator to decide when the robot will be performed in high performance mode or normal performance mode and thereby also choose a robot with dimensions accurately adapted for a particular task, and thereby also more accurately predict the service needed during the service life of the robot.

According to an embodiment of the invention the control system comprises a high performance estimation unit adapted to estimate, for said robot program, how large a portion of the robot work cycle the robot will run in high performance mode. In a preferred embodiment the high performance estimation unit is also adapted to compare the estimated portion, when the robot will run in high performance mode, with a maximum allowed portion of the robot work cycle the robot will run in high performance mode. Thereby it is made possible to measure the time the robot is performing in high performance mode and in normal performance mode, for instance, how large portion of the work cycle the robot is run in high performance mode. In a more preferred embodiment the high performance estimation unit is adapted to notify the operator if the estimated portion, when the robot will run in high performance mode, exceeds the maximum allowed portion. This embodiment makes it possible to supervise how long the robot is run in high performance mode and to create an alarm if a performance limitation parameter is exceeded.

According to an embodiment of the invention, the performance limitation parameters include limitations for motor torque and gear torque for the robot. This is an advantage because the strength and mechanical wear of the robot is dependent on the motor torque and gear torque developed when using the robot, and by deciding these parameters the capacity of the robot is decided, and thereby the operator avoids over-sizing the dimensions of the robot and thereby saves cost.

According to an embodiment of the invention, the high performance estimation unit comprises a clock to measure the period of time the robot is run in high performance mode during execution of at least one robot work cycle. Thereby it is made simpler to measure the time the robot is performing in high performance mode and in normal performance mode.

According to an embodiment of the invention, the high performance mode enables the robot to be run at higher speed than in normal performance mode. This is an advantage in applications where high speed motion is required during a portion of the robot work cycle.

According to an embodiment of the invention, the high performance mode enables the robot to lift larger weights than in normal performance mode. This is an advantage in applications where lifting larger weights than in normal performance mode is required during a portion of the robot work cycle.

In a second aspect this aim is obtained by a method as defined by claim 9.

Such a method for controlling an industrial robot, the method comprises:
- storing a first set of performance limitation parameters for running the robot in normal mode and a second set of performance limitation parameters for running the robot in high performance mode,
- creating and storing at least one robot program including a series of robot program instructions and including at least one instruction for switching to a high performance mode and at least one instruction for switching to normal mode, and
- executing the stored robot program instructions, and
- detecting whether normal or high performance mode is selected, and if normal performance mode is selected execute the robot program instructions with regard to the first set of performance limitation parameters, and if high performance mode is selected execute the robot program instructions with regard to the second set of performance limitation parameters.

In a third aspect this aim is obtained by using a control system according to the invention for robots used in machine tending applications.

### BRIEF DESCRIPTION OF THE DRAWINGS

The present invention will be described in more detail in connection with the enclosed schematic drawings.
- Figure 1: shows schematically an overview of a control system according to an embodiment of the invention,
- Figure 2: shows a part of the control system shown in figure 1 in more detail, and
- Figure 3: shows a simplified block diagram of a method according to an embodiment of the invention.

### DESCRIPTION OF THE PREFERRED EMBODIMENTS

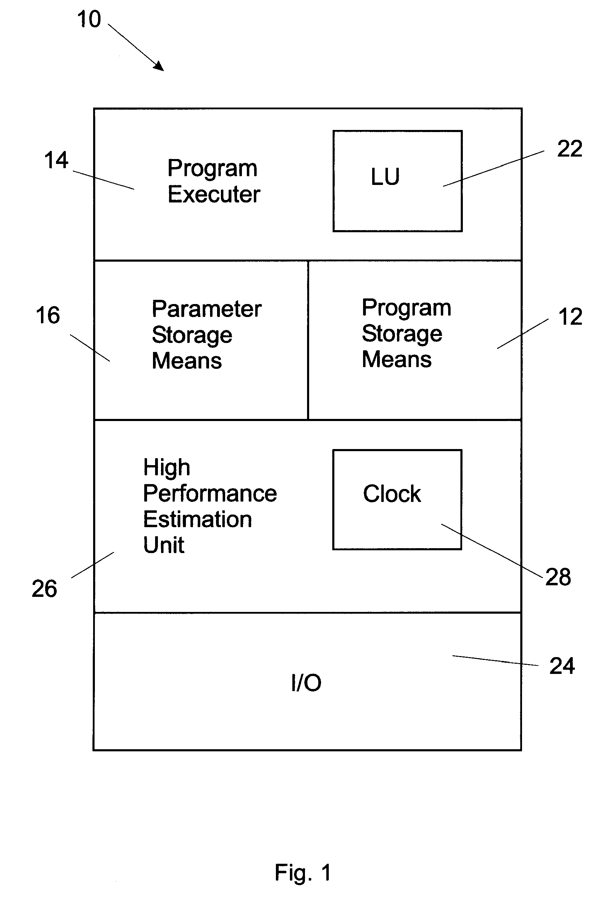

Figure 1 shows a control system for control of at least one industrial robot, not shown in the figure. The control system comprises one or more computers and drive units for controlling the robots. The control system is in one embodiment in connection with or located in a controller.

The control system 10 comprises at least a program storage means 12, a program executer 14 and a parameter storage means 16.

The program storage means 12 is used for storage of robot programs including a series of robot program instructions. The robot program instructions are, for instance, written in a robot language or any other programming language used to control the behaviour of a machine, such as a computer, or any other programming language, for instance, compatible with an object-oriented language such as C#. The program executer 14 comprises a logic unit 22 and is adapted to, when running the robot program, execute the stored robot program instructions. The parameter storage means 16 is used for storage of performance limitation parameters for running the robot. There are hundreds of performance limitation parameters set for each customer application of a robot, for instance, the largest allowed current to and the largest allowed speed for a motor, the largest allowed moment for a gear, temperature limitations, and/or maximum load.

The control system 10 also comprises input /output (I/O) interfaces 24 for communicating with the robot.

According to an embodiment of the control system 10 the parameter storage means 16 is used for storage of performance limitation parameters for running the robot in different modes, in this case, a first set of performance limitation parameters for running the robot in normal mode and a second set of performance limitation parameters for running the robot in high performance mode.

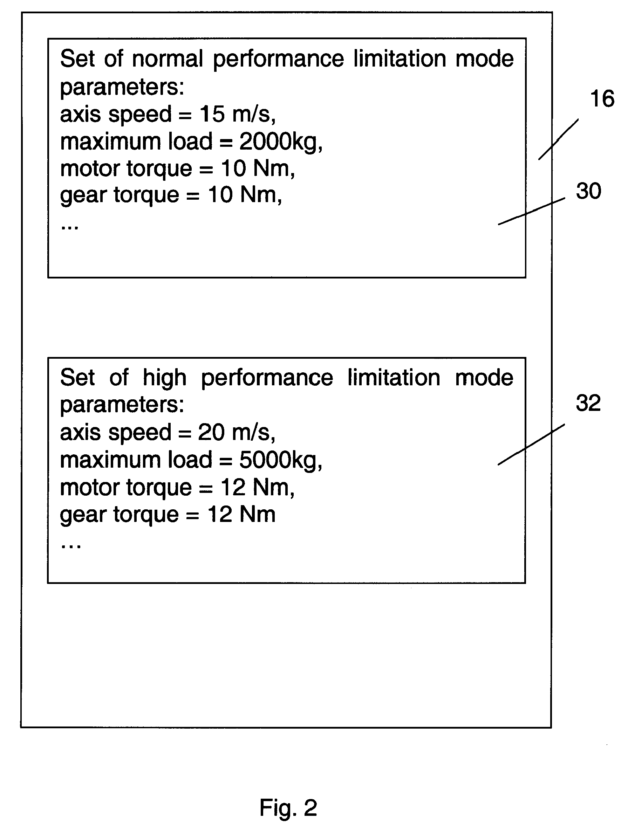

In figure 2 the parameter storage means program executer is shown in more detail.

The figure 2 shows an example on a set of normal performance limitation mode parameters, the first set of performance limitation parameters 30 in the embodiment described above:
axis speed = 15 m/s, maximum load = 2000kg, motor torque = 10 Nm, gear torque = 10 Nm,...

The figure 2 further shows an example on a set of high performance limitation mode parameters, the second set of performance limitation parameters 32 in the embodiment described above:
axis speed = 20 m/s, maximum load = 5000kg, motor torque = 12 Nm, gear torque = 12 Nm,...

The operator decides how the robot is allowed to be run by choosing which mode the robot is to be run in when teaching the robot a desired path by choosing the program instructions of the robot program. The robot usually starts out in normal mode. The program storage means 12 includes a number of instructions that each represents an action the robot is capable of perform. The program storage means 12 includes in this case at least one instruction for switching to a high performance mode and at least one instruction for switching back to normal mode. The robot program instruction for being in a high performance mode is a specified instruction, an occupied word in the programming language used, as example we use the word "Tend" for being in a high performance mode. Switching to a high performance mode will then be "Tend on", and switching back to normal performance mode will be "Tend off", for instance.

In this embodiment the program executer 14 is then adapted to execute the stored robot program instructions when running the robot program and detect whether normal or high performance mode is selected. When normal performance mode is selected the program executer 14 executes the robot program instructions, with regard to the first set of performance limitation parameters 30, and if high performance mode is selected executes the robot program instructions with regard to the second set of performance limitation parameters 32. When the robot runs it will move according to robot program instructions based on the desired path and the performance limitation parameters 30, 32.

In another embodiment the control system 10 further comprises a high performance estimation unit 26, also shown in figure 1, adapted to estimate, for said robot program, how large a portion of the robot work cycle the robot will run in high performance mode. The high performance estimation unit 26 is adapted to compare the estimated portion, when the robot will run in high performance mode, with a maximum allowed portion. The maximum allowed portion is, for instance, set dependent of a part of the calendar time, a part of the movement time, or a set frequency of the motors, a part of the movement path or a part of the time between two set points in space. The high performance estimation unit 26 is in one embodiment also adapted to notify the operator if the estimated portion, when the robot will run in high performance mode, exceeds the maximum allowed portion of the robot work cycle. The high performance estimation unit 26 comprises in one embodiment a clock 28 to measure the period of time the robot is run in high performance mode during execution of at least one robot work cycle. The high performance mode that is in another embodiment only allowed to be used with a specified frequency.

The performance limitation parameters include in one embodiment limitations for motor torque and gear torque for the robot, for instance, used in applications where the mechanical strain on the robot is severe. In a further embodiment the performance limitation parameters includes speed performance limitation parameters that is a control of the frequency of the motors of the robot. The capacity of a component is used over the total cycle time. The capacity of a mechanical structure and components is often measured by the rotational speed of an axis, gear torque of an axis, and/or motor torque of an axis.

In another embodiment of the control system 10 used in applications where, for instance, high speed motion is required during a portion of the robot work cycle the high performance limitation parameters that defines the high performance mode enables the robot to be run at higher speed than in normal performance mode. This is for instance used when the speed during a number of paths using high performance mode during a work cycle may influence the speed of the work flow in the factory.

In an embodiment of the control system 10, used in applications where lifting larger weights than in normal performance mode is required during a portion of the robot work cycle, the high performance limitation parameters that defines the high performance mode enables the robot to lift larger weights than in normal performance mode. Another alternative of this embodiment includes that these limitations parameters are only allowed to be used with a specified frequency, for instance.

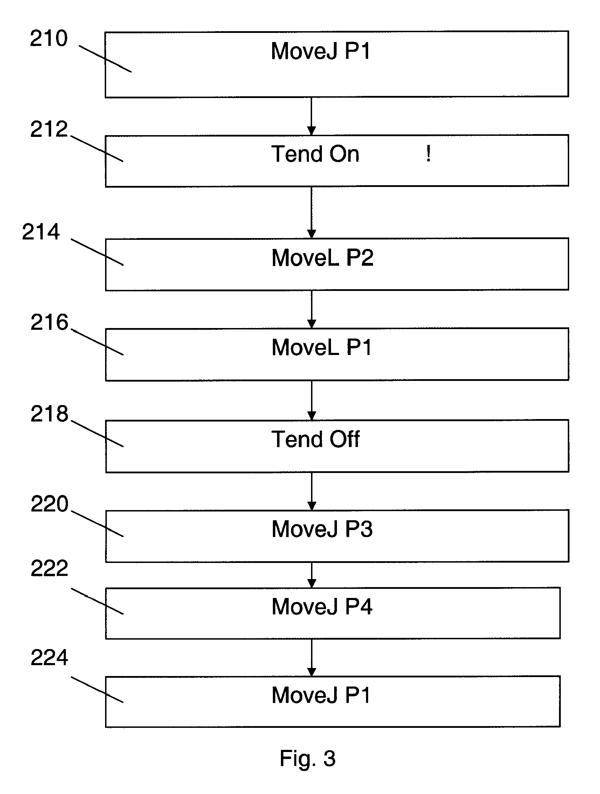

Figure 3 shows a method for controlling an industrial robot using different performance modes.

The method comprises:
- storing a first set of performance limitation parameters for running the robot in normal mode and a second set of performance limitation parameters for running the robot in high performance mode,
- creating and storing at least one robot program including a series of robot program instructions and including at least one instruction for switching to a high performance mode and at least one instruction for switching to normal mode, and
- executing the stored robot program instructions, and
- detecting whether normal or high performance mode is selected, and if normal performance mode is selected execute the robot program instructions with regard to the first set of performance limitation parameters, and if high performance mode is selected execute the robot program instructions with regard to the second set of performance limitation parameters.

Below is an example on a robot program that enables the robot to switch between high performance mode and low performance mode. Let Tend be the robot program instruction that switches between high performance mode and normal mode, Let MoveJ, and MoveL be the robot program instruction for moving a robot in different specified ways and P1, P2, P3, P4 geographical setpoints defined in a two-or three-dimensional space and specifying wherefrom and whereto the robot moves when executing the instruction for moving the robot. The sign "!" is in this case used to put text in the program that will be ignored when the program is executed.

The simplified program for a robot application could then look something like this:
- MoveJ P1: ! Start position outside machine, 210,
- Tend On: ! Switch to high performance mode, 212 ,
- MoveL P2: ! Going into machine to set-point P2, 214,
- MoveL P1: ! Going out from machine to set-point P1, 216,
- Tend Off: !Switch back to normal mode, 218,
- MoveJ P3: ! Doing something else at set-point P3, 220,
- MoveJ P4: ! Doing something else at set-point P4, 222,
- MoveJ P1: ! Doing something else at set-point P1, 224.

When the robot is run automatically, executing the robot program above, the robot in the start position, in this case the first executed "MoveJ P1" instruction, runs in normal performance mode using the set of normal performance limitation parameters.

In all instructions executed after the instruction "Tend on" is executed and before the instruction "Tend off" is executed in this case "MoveL P2", "MoveL P1" the robot is run in high performance mode using the set of high performance limitation parameters.

In all instructions executed after the instruction off" is executed in this case "MoveJ P3", "MoveJ P4", and the second executed "MoveJ P1" in the program the robot is run in normal performance mode using the set of normal performance limitation parameters.

A work cycle using a set of performance limitation parameters exceeding the specified limits in the chosen mode can only be done once during the programming of the robot program. Next work cycle when the robot is run automatically and the limits set in the performance limitation parameters are exceeded the industrial robot stops.

In one embodiment of the method the operator will get a warning the first time the work cycle is automatically run if the configuration parameters exceed the limits. The operator has in this case the choice between reprogram the robot or consciously exceed the limit and thereby decrease the life time of the robot.

In one embodiment of the method the method comprises estimating for said robot program, how large a portion of the robot work cycle the robot will run in high performance mode. The method comprises further, for instance, comparing the estimated portion, when the robot will run in high performance mode, with a maximum allowed portion. Additional the method comprises, for instance, notifying the operator if the estimated portion, when the robot will run in high performance mode, exceeds the maximum allowed portion.

In another embodiment the estimated portion in the embodiment above the robot is run in high performance mode during execution of at least one robot work cycle is calculated by using a pointer, pointing on the current executed command in the robot program, then the time interval starts when the pointer points at the instruction "Tend on" and the time interval stops when the pointer points at "Tend off", for instance.

In another embodiment the period of time the robot is run using high performance limitation parameters in high performance mode is calculated during pre-determined time intervals, for instance, using time intervals on 5 minutes.

In a physical implementation of a control system according to the invention, for instance, the operator uses: a tablet personal computer PC, a teach pendant unit, industrial robots, and communication modules with wireless access to information via GPS/GPRS, WLAN, Bluetooth IEEE 802.11, IEEE 802.15, Bluetooth, WLAN, ZigBee or other.

The logic unit or computing unit comprises a microprocessor, or processors comprising a central processing unit (CPU) or a field-programmable gate array (FPGA) or any a semiconductor device containing programmable logic components and programmable interconnects performing the steps of the method according to an aspect of the invention. This is performed with the aid of one or more computer programs, which are stored at least in part in memory accessible by the processor. It is to be understood that the computer programs may also be run on one or more general-purpose industrial microprocessors or computers instead of a specially adapted computer.

This invention is applicable to all industrial areas where industrial robots are mandated and other areas where introducing industrial robots systems are under discussion. It will be understood by those skilled in the art that various modifications and changes may be made to the present invention without departure from the scope thereof, which is defined by the appended claims. For instance it is possible to implement and switch between three or more sets of performance limitation parameters for running the robot specifying different modes. For instance another embodiment comprises three sets of performance limitation parameters corresponding to normal performance mode, high performance mode, and low performance mode. The high performance mode and normal performance mode is limited as described above and the low performance mode of the robot is limited according to low performance limitation parameters, which allows the robot to run at lesser load, such as at lesser speed and at lesser force then the limits set in normal performance mode. In these embodiments there are more specified instructions, i.e. occupied word in the programming language used, corresponding to other specified performance modes, such as the example above comprising a normal performance mode, a high performance mode, and a low performance mode.

## Claims

1. A control system (10) for an industrial robot, wherein the control system comprises:
a parameter storage means (16) for storage of a first set of performance limitation parameters (30) for running the robot in normal mode and a second set of performance limitation parameters (32) for running the robot in high performance mode,
a program storage means (12) for storage of at least one robot program including a series of robot program instructions and including at least one instruction for switching to a high performance mode and at least one instruction for switching to normal mode, and
a program executer (14) adapted to, when running the robot program, execute the stored robot program instructions, and detect whether normal or high performance mode is selected, and if normal performance mode is selected execute the robot program instructions with regard to the first set of performance limitation parameters, and if high performance mode is selected execute the robot program instructions with regard to the second set of performance limitation parameters.

2. A control system (10) according to claim 1, wherein it comprises a high performance estimation unit (26) adapted to estimate, for said robot program, how large a portion of the robot work cycle the robot will run in high performance mode.

3. A control system (10) according to claim 2, wherein the high performance estimation unit (26) is also adapted to compare the estimated portion, when the robot will run in high performance mode, with a maximum allowed portion.

4. A control (10) system according to claim 3, wherein said high performance estimation unit (26) is adapted to notify the operator if the estimated portion, when the robot will run in high performance mode, exceeds the maximum allowed portion.

5. A control system (10) according to any of claims 1-4, wherein said performance limitation parameters (30, 32) include limitations for motor torque and gear torque for the robot.

6. A control system (10) according to any of claims 1-5, wherein the high performance estimation unit (26) comprises a clock (28) to measure the period of time the robot is run in high performance mode during execution of at least one robot work cycle.

7. A control system (10) according to any of claims 1-6, wherein in the high performance mode enables the robot to be run at higher speed than in normal performance mode.

8. A control system (10) according to any of claims 1-6, wherein in the high performance mode enables the robot to lift larger weights than in normal performance mode.

9. A method for controlling an industrial robot, the method comprises:
- storing a first set of performance limitation parameters (30) for running the robot in normal mode and a second set of performance limitation parameters (32) for running the robot in high performance mode,
- creating and storing at least one robot program including a series of robot program instructions and including at least one instruction for switching to a high performance mode and at least one instruction for switching to normal mode, and
- executing the stored robot program instructions, and
- detecting whether normal or high performance mode is selected, and if normal performance mode is selected execute the robot program instructions with regard to the first set of performance limitation parameters, and if high performance mode is selected execute the robot program instructions with regard to the second set of performance limitation parameters.

10. A method according to claim 9, wherein the method comprises estimating for said robot program, how large a portion of the robot work cycle the robot will run in high performance mode.

11. A method according to any of claims 9-10, wherein the method comprises comparing the estimated portion, when the robot will run in high performance mode, with a maximum allowed portion.

12. A method according to any of claims 9-11, wherein the method comprises notifying the operator if the estimated portion, when the robot will run in high performance mode, exceeds the maximum allowed portion.

13. A method according to any of claims 9-12, wherein said performance limitation parameters (30, 32) include limitations for motor torque and gear torque for the robot.

14. A method according to any of claims 9-13, wherein in the high performance mode enables the robot to be run at higher speed than in normal performance mode.

15. A method according to any of claims 9-13, wherein in the high performance mode enables the robot to lift larger weights than in normal performance mode.

16. Use of a control system according to any of claims 1-8 in machine tending applications.
